(19) **Europäisches Patentamt**
**European Patent Office**
**Office européen des brevets**

(11) **EP 2 782 381 A1**

(12) **EUROPEAN PATENT APPLICATION**

(43) Date of publication:
**24.09.2014 Bulletin 2014/39**

(51) Int Cl.:
***H04W 24/02*** (2009.01)  ***H04W 24/10*** (2009.01)

(21) Application number: **13305353.8**

(22) Date of filing: **22.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Razavi, Rouzbeh**
  **DUBLIN, 15 (IE)**
• **Claussen, Holger**
  **DUBLIN, 15 (IE)**

(74) Representative: **Leppard, Andrew John et al**
**Script IP Limited**
**Turnpike House**
**18 Bridge Street**
**Frome BA11 1BB (GB)**

(54) **Optimizing configuration parameters of a cluster of base stations**

(57)    A wireless telecommunications network node, method and computer program product are disclosed. The method is for adjusting configuration parameters of a cluster of base stations of a wireless telecommunications network, the method comprises: receiving at least one configuration report comprising measurements from user equipment attached to the cluster of base stations together with configuration parameter information indicating current configuration parameters of the cluster of base stations; utilising the configuration report together with sets of adjusted configuration parameters to determine a network performance of the cluster of base stations when operating using each set of adjusted configuration parameters from a network performance model; selecting one of the sets of adjusted configuration parameters which achieves a network performance which best matches a desired network performance criteria; and reconfiguring the cluster of base stations with the one of the sets of adjusted configuration parameters. Hence, it is possible to adjust the performance of the cluster of base stations taking into account the impact of those changes on the user equipment based on their distribution through the cluster. This helps to improve the performance of the cluster based on the actual distribution of user equipment within that cluster.

Figure 3

**Description**

FIELD OF THE INVENTION

The present invention relates to a wireless telecommunications network node, method and computer program product.

BACKGROUND

In a cellular wireless telecommunications network, radio coverage is provided by areas known as cells. A base station is located in each cell to provide the radio coverage area or cell. Traditional base stations provide coverage in relatively large geographical areas and these are often referred to as macro cells. It is possible to provide smaller sized cells, often within a macro cell. Such smaller sized cells are sometimes referred to as micro cells, pico cells or femto cells. Such small cells are typically established by providing a small cell base station that provides radio coverage having a relatively limited range, typically within the radio coverage area of a macro cell. The transmission power of the small cell base station is relatively low and, hence, each small cell provides a smaller coverage area compared to that of a macro cell and covers, for example, an office or a home. A group or cluster of such small cell base stations may together provide a wireless small cell network.

Such small cells have generally been provided where the communication coverage provided by the macro cell is poor, or where a user wishes to use an alternative communications link provided locally by the small cell base station, to communicate with the core network. Such a situation might arise where, for example, a user has a pre-existing communications link and the user wishes to utilise that link in preference to that provided by the macro cell network provider to communicate with the core network. However, increasingly, small cells are being deployed in areas of high traffic demand (often referred to as hot spots), where that demand risks overloading the macro cell. Users can then be handed over to the small cell in order to reduce the traffic load on the macro cell.

Although providing such small cells can provide many advantages, unexpected consequences can also occur.

Accordingly, it is desired to provide an improved technique for controlling the interaction between user equipment and base stations.

SUMMARY

According to a first aspect, there is provided a method of adjusting configuration parameters of a cluster of base stations of a wireless telecommunications network, the method comprising: receiving at least one configuration report comprising measurements from user equipment attached to the cluster of base stations together with configuration parameter information indicating current configuration parameters of the cluster of base stations; utilising the configuration report together with sets of adjusted configuration parameters to determine a network performance of the cluster of base stations when operating using each set of adjusted configuration parameters from a network performance model; selecting one of the sets of adjusted configuration parameters which achieves a network performance which best matches a desired network performance criteria; and reconfiguring the cluster of base stations with the one of the sets of adjusted configuration parameters.

The first aspect recognises that a problem with the deployment of base stations such as, for example, small cell base stations, is that although this can lead to improvement in network performance, the miss-configuration of such base stations can lead to performance degradation. Although it may be possible to attempt to plan the configuration of the base stations, this cannot take into account the distribution of users within the network, which may change over time, the relationship between the distribution of users and the configuration of the base stations having an impact on the network performance.

Accordingly, a method of adjusting configuration parameters of base stations is provided. The method may comprise the step of receiving one or more configuration reports. Each configuration report may comprise measurements from user equipment attached, supported or connected to base stations within a cluster of base stations. The configuration report may also include information indicating the current configuration parameters of the base stations within the cluster of base stations. Hence, each configuration report contains both measurements made by user equipment within the cluster as well as information detailing the configuration of those base stations. From this, it is possible to derive relationships between the user equipment and the base stations and, in particular, an understanding of how those relationships will change, should the configuration of the base stations be changed. Accordingly, the method may comprise the step of utilising the configuration report together with different sets of adjusted configuration parameters in order to determine the performance of the cluster of base stations when configured with those different configurations. This enables an assessment of possible changes to the network to be made, in order to see how they would impact on performance. In order to assess whether any particular change is beneficial, a desired performance criteria may be defined and the performance of the cluster under each of those different configurations may be assessed against that criteria. This enables an assessment to be made of whether any of the reconfigurations would lead to improved performance and, if so, which one improves performance the most. Accordingly, the method may comprise the step of selecting one of the sets of configuration parameters which most closely achieves the desired performance criteria. The method may also comprise the step of reconfiguring the base stations to have that adjusted configuration. Hence, it is possible to adjust the performance of the cluster of base stations taking into account the impact of those changes on the user equipment based on their distribution through the cluster. This helps to improve the performance of the cluster based on the actual distribution of user equipment within that cluster.

In one embodiment, the measurements comprise measurement reports generated by the user equipment attached to the cluster of base stations. Accordingly, the measurements within the configuration report may include measurement reports generated by user equipment attached, supported or connected to the base stations within the cluster. Accordingly, no additional or new measurements need be made by the user equipment which may instead simply reuse existing functionality.

In one embodiment, the measurements comprise measurement reports received from the cluster of base stations. Accordingly, the measurement reports may be received by base stations within a cluster of base stations and collated, those measurement reports may then be provided periodically to generate the configuration reports.

In one embodiment, the measurements comprise sets of measurement reports, each set being received from an associated base station within the cluster of base stations. Accordingly, the measurements may be made up of different sets of measurement reports. Each of the sets of measurement reports may be received from a corresponding or associated base station. That is to say, each base station may provide a set of measurement reports, each measurement report within that set being received from corresponding user equipment attached to that base station. Each base station within the cluster may then provide its set of measurement reports for inclusion in the configuration report.

In one embodiment, each set of measurement reports comprises at least one of a received pilot signal strength of transmissions from the cluster of base stations received by each user equipment attached to the associated base station and a signal to interference plus noise ratio for each user equipment. By providing the received pilot signal strength, it is possible to identify the strengths of pilots being received by the user equipment and by providing a signal-to-interference-plus-noise ratio, the level of interference being experienced by the user equipment can also be determined.

In one embodiment, the measurements comprise a number of user equipment currently attached to the associated base station. The measurements may also include an indication provided by each base station of the number of user equipment currently supported by, connected to, or attached to that base station. This information can then be used when assessing changes in throughput that may be possible by reconfiguring the base stations.

In one embodiment, the configuration parameter information comprises at least one of a pilot power of an associated base station, a bias value for the associated base station, a dedicated downlink transmission power of the associated base station and a total transmission power of the associated base station. Accordingly, the current configuration of each base station may be provided for incorporation into the configuration report. Again, this information can be used to help derive the current relationships between the user equipment and the cluster of base stations and how changes to the configuration of the base stations will change network performance.

In one embodiment, each configuration report comprises an identifier. Accordingly, the configuration report may include an identifier. In addition, each of the sets of measurements and the configuration parameter information may also include an identifier in order that each configuration report maybe compiled from associated information.

In one embodiment, the cluster of base stations comprises at least one small cell base station supporting a small cell. Accordingly, the cluster may comprise one or more base stations. In particular, the cluster may comprise one or more small cell base stations.

In one embodiment, the cluster of base stations comprises at least one small cell base station supporting a small cell at least partially within an overlying cell supported by an overlying cell base station. Accordingly, the cluster of base stations may be located within an overlying cell.

In one embodiment, each configuration report comprises measurements from user equipment, each of which are made within a synchronisation window. Accordingly, each configuration report may include those measurements which have been made within a defined synchronisation window or time period. This ensures that each of the measurements within the configuration report were made at substantively the same time in order that an accurate understanding of the relationship between the user equipment and base stations can be assessed.

In one embodiment, each configuration report comprises configuration parameter information indicating current configuration parameters of the cluster of base stations within the synchronisation window. Likewise, each of the configuration parameters is also those which were used at the time that the measurements were made.

In one embodiment, the synchronisation window comprises a time period within which a variation of wireless channel condition experienced by user equipment fails to exceed a threshold amount. Accordingly, the synchronisation window may comprise a period of time or a duration within which the stability of the wireless channel condition was high.

In one embodiment, the step of receiving comprises receiving a plurality of configuration reports, the measurements and the configuration parameter information of each configuration report relating to an associated synchronisation window. Accordingly, more than one configuration report may be received. Each configuration report may provide a snapshot of the network conditions at a different period in time.

In one embodiment, the step of receiving comprises receiving the plurality of configuration reports periodically. Accordingly, the configuration reports may be received at regular time intervals.

In one embodiment, the step of utilising comprises deriving from the measurements and the configuration parameter information at least one of a path loss between each user equipment and each base station and an interference level for each user equipment. Through the correlation between the measurements and the configuration parameters it is possible then to derive the path loss between user equipment and base stations as well as an interference level for those user equipment.

In one embodiment, the step of utilising comprises deriving from the measurements and the configuration parameter information from each configuration report at least one of a path loss between each user equipment and each base station and an interference level for each user equipment. Accordingly, a path loss and interference level may be derived from each of the different configuration reports.

In one embodiment, the step of deriving comprises deriving the path loss from the pilot power and the received pilot signal strength.

In one embodiment, the step of deriving comprises deriving the interference level from the dedicated downlink transmission power, the path loss and the signal to interference plus noise ratio.

In one embodiment, the step of utilising comprises utilising each set of adjusted configuration parameters and at least one of the path loss and the signal to interference plus noise ratio within the network performance model to derive associated network performance indicators for the cluster of base stations when operating each set of adjusted configuration parameters. Accordingly, the calculated path losses and interference levels may be utilised by a network performance model. In particular, the network performance model may utilise that information together with different configuration parameters to calculate a revised performance of the cluster when operating with different configuration parameters. This enables the effect of these different configuration parameters to be calculated.

In one embodiment, the step of utilising comprises utilising each of set of adjusted configuration parameters and at least one of the path loss and the signal to interference plus noise ratio for each configuration report within the network performance model to derive associated network performance indicators for the cluster of base stations when operating with the set of adjusted configuration parameters.

In one embodiment, the step of selecting comprises selecting that set of adjusted configuration parameters whose derived performance indicator best matches the performance criteria. Accordingly, the configuration parameters which provide a performance which is closest to the performance criteria may be selected. This helps to optimise the performance of the network to match the conditions. It will be appreciated that the frequency with which such optimizations are made will depend largely on the network stability required, and so it may be desirable to apply some averaging weighting in order to prevent rapid fluctuations in configuration. Also, it may be that the network experiences very different user distributions at different times and so it may be appropriate to optimize the configuration of the network based on configuration reports gathered over, for example, a period of days or weeks within each of those time periods.

In one embodiment, the performance indicator comprises at least one of a throughput and an indication of base station load and the performance criteria comprises a corresponding at least one of a desired throughput and a desired base station load. It will be appreciated that throughput and load balancing are two key performance indicators which could be optimized, but that any performance indicator may be used.

In one embodiment, each set of adjusted configuration parameters comprise at least one of the pilot power, the bias value and the dedicated downlink transmission power.

In one embodiment, the step of utilising comprises generating an initial set of adjusted configuration parameters and generating subsequent sets of adjusted configuration parameters based on a derived performance indicator for a preceding set of adjusted configuration parameters. Accordingly, a first set of adjusted control parameters may be evaluated and, based on their calculated impact on network performance, subsequent sets may be generated based on the change in performance.

According to a second aspect, there is provided a computer program product operable, when executed on a computer, to perform the method steps of the first aspect.

According to a third aspect, there is provided claim a network node operable to adjust configuration parameters of a cluster of base stations of a wireless telecommunications network, the network node comprising: reception logic operable to receive at least one configuration report comprising measurements from user equipment attached to the cluster of base stations together with configuration parameter information indicating current configuration parameters of the cluster of base stations; utilisation logic operable to utilise the configuration report together with sets of adjusted configuration parameters to determine a network performance of the cluster of base stations when operating using each set of adjusted configuration parameters from a network performance model; selection logic operable to select one of the sets of adjusted configuration parameters which achieves a network performance which best matches a desired network performance criteria; and reconfiguration logic operable to reconfigure the cluster of base stations with the one of the sets of adjusted configuration parameters.

In one embodiment, the measurements comprise measurement reports generated by the user equipment attached to the cluster of base stations.

In one embodiment, the measurements comprise measurement reports received from the cluster of base stations.

In one embodiment, the measurements comprise sets of measurement reports, each set being received from an associated base station within the cluster of base stations.

In one embodiment, each set of measurement reports comprises at least one of a received pilot signal strength of transmissions from the cluster of base stations received by each user equipment attached to the associated base station and a signal to interference plus noise ratio for each user equipment.

In one embodiment, the measurements comprise a number of user equipment currently attached to the associated base station.

In one embodiment, the configuration parameter information comprises at least one of a pilot power of an associated base station, a bias value for the associated base station, a dedicated downlink transmission power of the associated base station and a total transmission power of the associated base station.

In one embodiment, each configuration report comprises an identifier.

In one embodiment, the cluster of base stations comprises at least one small cell base station supporting a small cell.

In one embodiment, the cluster of base stations comprises at least one small cell base station supporting a small cell at least partially within an overlying cell supported by an overlying cell base station.

In one embodiment, each configuration report comprises measurements from user equipment, each of which are made within a synchronisation window.

In one embodiment, each configuration report comprises configuration parameter information indicating current configuration parameters of the cluster of base stations within the synchronisation window.

In one embodiment, the synchronisation window comprises a time period within which a variation of wireless channel condition experienced by user equipment fails to exceed a threshold amount.

In one embodiment, the reception logic is operable to receive a plurality of configuration reports, the measurements and the configuration parameter information of each configuration report relating to an associated synchronisation window.

In one embodiment, the reception logic is operable to receive the plurality of configuration reports periodically.

In one embodiment, the utilisation logic is operable to derive from the measurements and the configuration parameter information at least one of a path loss between each user equipment and each base station and an interference level for each user equipment.

In one embodiment, the utilisation logic is operable to derive from the measurements and the configuration parameter information from each configuration report at least one of a path loss between each user equipment and each base station and an interference level for each user equipment.

In one embodiment, the utilisation logic is operable to derive the path loss from the pilot power and the received pilot signal strength.

In one embodiment, the utilisation logic is operable to derive the interference level from the dedicated downlink transmission power, the path loss and the signal to interference plus noise ratio.

In one embodiment, the utilisation logic is operable to utilise each set of adjusted configuration parameters and at least one of the path loss and the signal to interference plus noise ratio within the network performance model to derive associated network performance indicators for the cluster of base stations when operating each set of adjusted configuration parameters.

In one embodiment, the utilisation logic is operable to utilise each of set of adjusted configuration parameters and at least one of the path loss and the signal to interference plus noise ratio for each configuration report within the network performance model to derive associated network performance indicators for the cluster of base stations when operating with the set of adjusted configuration parameters.

In one embodiment, the selection logic is operable to select that set of adjusted configuration parameters whose derived performance indicator best matches the performance criteria.

In one embodiment, the performance indicator comprises at least one of a throughput and an indication of base station load and the performance criteria comprises a corresponding at least one of a desired throughput and a desired base station load.

In one embodiment, each set of adjusted configuration parameters comprise at least one of the pilot power, the bias value and the dedicated downlink transmission power.

In one embodiment, the of utilisation logic is operable generate an initial set of adjusted configuration parameters and generating subsequent sets of adjusted configuration parameters based on a derived performance indicator for a preceding set of adjusted configuration parameters.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates four different scenarios where a small cell is deployed on the same carrier as the underlying or overlaying macro cell;
Figure 2 shows the total throughput-SINR curve for a High Speed Data Packet Access system;
Figure 3 illustrates a method according to one embodiment;
Figure 4 shows an example fitness as a function of small cell deployment offset from the centre of a hot spot; and
Figure 5 shows fitness values for varying number of small cells deployed.

DESCRIPTION OF THE EMBODIMENTS

Overview

Before discussing the embodiments in any more detail, first an overview will be provided. As mentioned above, the deployment of small cells presents challenges since, whilst there is an opportunity for improvements in network performance, network performance can also be severely impacted when the small cells are poorly configured. In particular, configuration of small cells should ideally take into account not only the relationships between closely-located small cells and any overlying/underlying macro cell, but also the location and distribution of any user equipment.

Accordingly, embodiments provide a technique where the configuration parameters of a cluster of base stations may be adjusted. A network node (which may be a base station itself, a gateway, a radio network controller, a mobility management entity, or another node within the network) receives one or more configuration reports. Each configuration report contains a snapshot of measurements from the user equipment attached to base stations within the cluster, along with an indication of the current configuration parameters of the base stations. This information can then be utilised to optimize the performance of the base stations, based not only on the configuration of the base stations themselves but also using information collected by user equipment which provides an indication of the distribution of that user equipment within the cluster of base stations and the conditions being experienced by those user equipment. The configuration report can then be utilised by a performance model to model the performance of the network during each snapshot and the configuration parameters of the cluster of base stations can then be adjusted to determine what impact this has on the performance of the cluster. A desired performance criteria can be specified (such as a desired throughput, loading, etc.) and an adjusted set of configuration parameters that most closely achieves the desired performance criteria can be selected and then applied to the cluster of base stations, thereby reconfiguring the cluster of base stations to improve their performance.

In order to assess the performance of the cluster under different conditions, multiple configuration reports, each of which provides a snapshot at a different point in time, may be collected. These different configuration reports may be used to assess the performance of adjusted configuration parameters under different conditions at those different times. Again, those adjusted configuration parameters which best achieve a desired performance criteria under the different conditions indicated by the different configuration reports maybe selected and used to reconfigure the cluster of base stations.

Groups of configuration reports may also be created, each group providing a snapshot of the cluster of base stations and distribution of user equipment at different times. For example, it is possible to group configuration reports from different times of the day or from different days (such as early morning, lunch time, late afternoon, evening or night time, as well as week days or weekends) and to assess the performance of adjusted configuration parameters based on the configuration reports from these different groups. This enables the configuration parameters to be assessed based on the different expected distributions of user equipment at these different times. This enables different configuration parameters to be used at these different times, based on analysis of the historic performance of the network during these time periods.

Small Cell Deployments

Small cell networks, by virtue of their reduced coverage range, low cost and high performance, are utilised extensively for radio access in cellular wireless telecommunications networks. Their reduced coverage range suggests that the spectrum of efficiency that can be attained is much greater than that which would be achievable using macro cells alone. In addition, the low costs associated with small cells means that they can be deployed as consumer equipment, effectively reducing the capital load and operating expenses of the host network. Also, as a result of the enhanced link budgets due to the close placement of the transmitter and receiver, improved services and higher data rates can be realised than that achievable using macro cells alone.

Whilst operating small cells on a dedicated frequency is possible, co-channel operation with an existing overlying macro cellular network is more challenging, but also provides significantly increased spectral efficiency per area through spatial frequency re-use. Such co-channel deployments are feasible and increase network throughput. However, adding more co-channel small cells has an impact on the performance of the macro cell users whilst the throughput of the small cell users is significantly improved. However, deployment of small cells configured for co-channel operation is challenging in an outdoor environment. Achieving the optimal configuration of the small cells when deployed on the same frequency as the overlying macro cell is extremely important. Also, as the density of deployment of small cells increases, the level of inter-small cell interference may become significant and so requires the small cells to be configured optimally when deployed, without prior planning, or otherwise the small cells may not improve the network-wide performance but may also lead to increased interference for users. It will be appreciated that if the offloading gain from a small cell base station is less significant than its interference impact, the small cell base station could then be considered as a burden on the network.

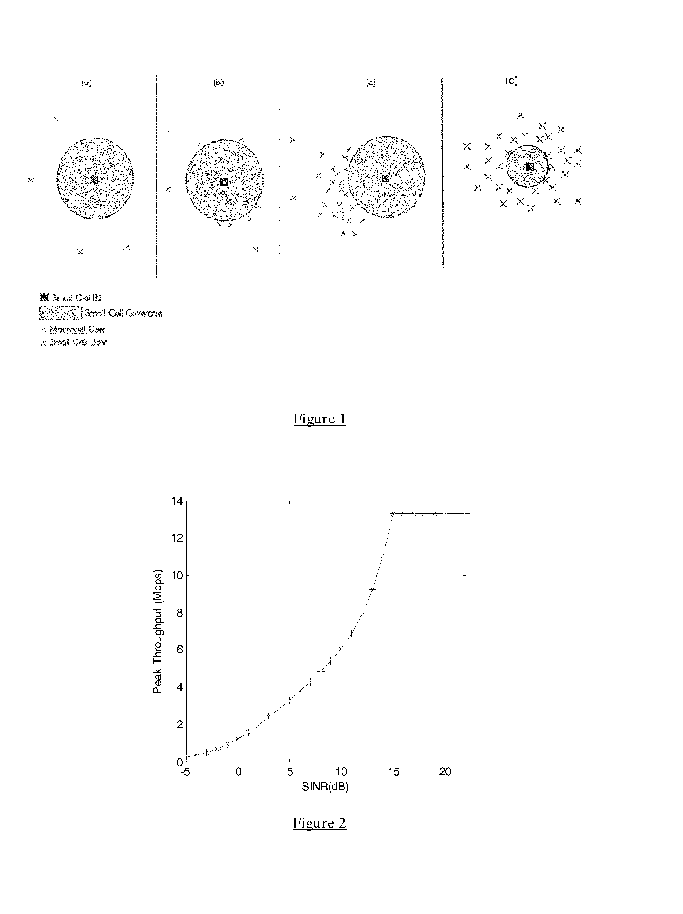

To highlight this, Figure 1 illustrates four different scenarios where a small cell is deployed on the same carrier as the underlying or overlaying macro cell. Figure 1A illustrates an ideal configuration where the small cell offloads large numbers of users from the macro cell without introducing significant interference to the remaining macro cell users. The configuration shown in Figure 1B is less ideal, but may be acceptable. Although there are a number of macro cell users at the edge of the small cell which may be affected by interference from the small cell, the offloading gain of the small cell is significant. Figure 1C shows that many macro cell users will be affected by interference from the small cell whilst the offload to the small cell is marginal. It can be seen that in each of Figures 1A to 1C the small cell is configured identically, whilst the distribution of user equipment in relation to that small cell changes, which significantly changes the performance experienced by the users. Figure 1D shows the arrangement of a small cell which is poorly configured since the pilot power is too low which results in a marginal offload gain and considerable interference to the macro cell users. Also, it will be appreciated that the arrangement shown in Figures 1A to 1D is a simplified one where only a single small cell is illustrated. In reality, multiple small cells will be provided, each of which has the potential to interact with and interfere with each other.

Given that the deployment of small cells is unplanned, identifying likely scenarios such as those shown in Figures 1C and 1D is difficult. Even with such planning, the distribution of users may change over time (for example, new hot spots may be formed or lost). Embodiments provide an efficient yet practical solution for optimally configuring small cells taking into account the actual small cell and user distribution. This enables the operator to be provided with a view of the network and the contribution of each small cell towards any defined objective function.

Although techniques for improving the performance of such a network exist, the potential detrimental impact due to misplacement or mal-configuration of small cells on overall network performance may still go unnoticed. Although techniques can to some extent improve this performance, they may also additionally lead to performance instability and lack of convergence. Also, most of these techniques are based on local greedy performance optimization methods due to their limited view of the overall network picture and lack of information on the user distribution.

Network Model

In order to derive the optimal configuration for the small cells, a network model is constructed and utilized by typically the hosting macro cell base station (or any other central network entity) that can evaluate the impact and contribution of each individual small cell. This model is constructed by aggregating user measurements from different cells. Each cell (including the macro cell) records a snapshot of its users' measurements periodically and each cell sends these snapshots to the macro cell (or any other central network entity) later on for utilization. The macro cell base station can then approximate the model to evaluate the contribution of each small cell. The evaluation process may be based on different objective functions that are defined by a network operator. Additionally, an optimization mechanism is used to identify the optimal configuration of the small cells in order to maximise the objective function.

The snapshots include standard user measurements that may be collected as part of the standard operation of the network. The configuration report includes a snapshot of user measurements. The frequency of recording such snapshots into an associated configuration report is typically in the order of seconds (for example, every 10 seconds) and hence the required overhead is marginal. Once sufficient snapshots are collected in the configuration reports, these are then sent to the macro cell (or other central entity). The macro cell then uses the snapshots collected from all cells and estimates the objective function (for example, the achievable level of user throughput, the number of users supportable by each base station or other performance or configuration objectives) for any given configuration of small cells which enables an optimal configuration to be determined which best achieves that objective function.

Accordingly, it can be seen that this approach provides a method of creating a suitable model based on available network information and subsequent optimization of configuration of the cells using that model.

Configuration Reports

Deriving the model to evaluate the contribution of each small cell and to identify the optimal configuration of the small cells is important. The model is constructed based on measurement reports from small cell users and those collected by the macro cell base station itself over a long enough period of time. Ideally, these snapshots should be recorded synchronously amongst all cells. In other words, the measurements should all be made at the same time, or at least within a defined synchronization window. If the measurements are not all synchronized then this can provide a misleading view of the network, since path losses can vary reasonably rapidly. Synchronizing the measurement reports is possible by ensuring that they are made with the same frequency and time offset. This can be done by coordination from the macro cell using the IEEE 1588 time synchronization standard or other methods such as the Network Time Protocol (NTP). However, it will be appreciated that this technique does not necessarily require a very high level of synchronization accuracy and a synchronization window (within which each of the measurements should be made as a snapshot for an associated configuration report) can have measurements made with time offsets in the order of a few hundred milliseconds.

Each snapshot within a configuration report provided by one of the base stations within the cluster to the macro cell base station or other central entity should typically contain the following information:

    a configuration report or snapshot identifier which typically includes an identifier of the cell and a sequence number of the configuration report or snapshot or a time stamp;
    the number of active users being served by that cell;
    the Signal to Interference plus Noise Ratio (SINR) of each of the active users within that cell (typically expressed in dB);
    the received pilot power received from own and other cells (if detectable) measured by each active user;
    the pilot power of the cell (typically expressed in dBm);
    the cell selection bias values (if there are any);
    the dedicated downlink transmit power per active user; and
    the total transmit power of the cell (typically expressed in dBm).

Once enough snapshots or configuration reports are collected by the cells, the cells then send these to the macro cell (or the other central entity) where the model is created and evaluated.

The entity receiving these configuration reports will then collate the configuration reports for use in the model. Typically, the configuration reports from the different cells all taken within the same synchronization window will be associated together for use by the model. This ensures that the model can utilise the configuration information relating to each of the cells, together with the measurements regarding each of those cells made by user equipment within the cluster, so that a complete picture of the cluster at that time can be utilised by the model. Also, these associated configuration reports may be grouped into groups based on, for example, different times of the day, so that the configuration of the cluster of base stations can be optimized for different times of the day.

The objective function used by the operator may be, for example, a function of the user's achievable throughput which depends on the number of users within the cell and those users' SINR values. Depending on the radio access technology being used, the mapping between SINR and the achievable throughput may differ. However, in most cases a mapping curve or function is definable. For example, Figure 2 shows the total throughput-SINR curve for a High Speed Data Packet Access (HSDPA) system. The base station configuration settings considered typically consist of the small cells' pilot power values, the dedicated power to the data channels and potentially the cell selection bias values.

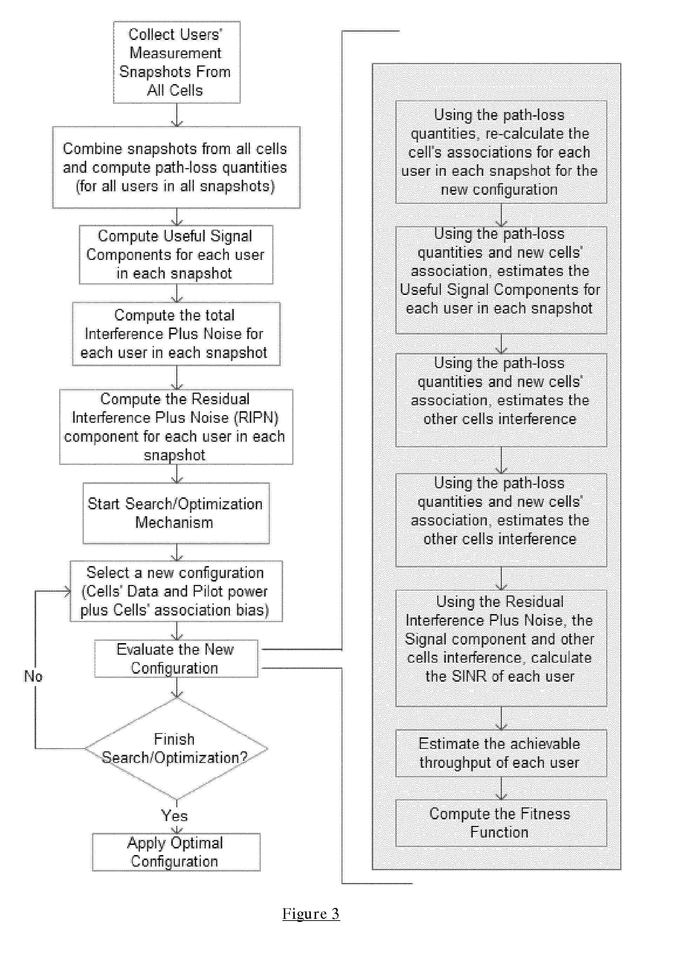

Using the snapshot measurements from the cells, the macro cell or other network entity is capable of estimating the objective function for any given configuration settings of the cells (including the macro cell itself) by performing the following steps on a snapshot basis, as Illustrated in Figure 3:

    1. Using the snapshots from all cells, calculate the estimated path-loss between each active user and other cells (using the transmit pilot from each cell and the received pilot power at each user);
    2. Using the snapshot reported from each cell, for each cell's user, determine the useful signal component. This is derived based on dedicated transmit downlink power to the user and the estimated path loss between the user and the serving cell;

3. Using the snapshot reported from each cell, for each cell's user, estimate the total Interference Plus Noise (IPN) component. Given that the useful signal component and the SINR values are given, IPN can be estimated in a simple way;

4. Using the snapshots from all cells, for each user, estimate the interference contribution from each of the other cells;

5. Given the IPN and the sum of the interference from all exiting cells, calculate the Residual Interference Plus Noise (RIPN) component. This quantity reflects the noise and interference from all sources other than the existing cells (e.g. neighbouring macrocells, noise etc.);

6. Using the estimated path loss quantities, and new configuration settings (specifically, cell's transmitted pilot power and cell selection bias values), update users' cell association;

7. Update cells' load;

8. Update cells' total transmit power;

9. Using the estimated path loss quantities, updated cells' association and dedicated downlink transmit power reflected in the new configuration settings, estimate the useful signal component for each user;

10. Using the estimated path loss quantities, updated cells' association and total transmit power reflected in the new configuration settings, estimate the interference impact of each cell on each user;

11. Using the RIPN quantities calculated in step 4 for each user, and the interference component from each cell (calculated in step 10), estimate the updated total Interference Plus Noise (IPN) component for each user;

12. Given the useful signal component for each user estimated in step 7, and the updated total Interference Plus Noise (IPN) component derived in previous step, calculate the updated SINR values;

13. Derive the achievable users' throughput from SINR quantities and updated cells' load.

Once the achievable throughput is calculated for each user and for all snapshots, the objective function corresponding to the given configuration setting can be consequently estimated. Then, using an optimization or a search mechanism, different configuration settings can be evaluated in order to find an optimal configuration.

To express the above steps more formally, the following notations are defined:

- Let $B$ to represent the set of base-stations (including small cells and macro cells)
- Let $P^P(b)$ to be the pilot transmit power of base-station $b$ ($b \in B$)
- Let $P^D(b)$ to be the power dedicated to downlink data channel at base-station $b$ ($b \in B$)
- Let $P^T(b)$ to represent the total transmit power of base-station $b$ ($b \in B$)
- Let $\delta(b)$ to denote the cell association bias for base-station $b$ ($b \in B$). A user, $u$, selects base-station $b_1$ over base-station $b_2$ as its serving cell if $R(u,b_1)+\delta(b_1) > R(u,b_2)+\delta(b_2)$
- Let $N(b)$ to denote the number of active users for base-station $b$ ($b \in B$)
- Let $U$ to represent the set of users
- Let $SB(u)$ to represent the serving base-station of user $u$ ($u \in U$)
- Let $IN^{Tot}(u)$ to represent the total Interference plus Noise at user $u$ ($u \in U$)
- Let $SINR(u)$ to represent the SINR of user $u$ ($u \in U$) expressed in dB
- Let $IN^{other}(u)$ to denote the Interference plus Noise components at user $u$ ($u \in U$) from all sources other than the set of base-station, $B$, considered (e.g. Noise component or interference from neighbouring macrocell)
- Let $S(u)$ to denote the useful signal component received from the serving cell at user at user $u$ ($u \in U$)
- Let $PL(u,b)$ to be the path-loss between user $u$ ($u \in U$) and base-station $b$ ($b \in B$)
- Let $R(u,b)$ to be the received pilot power at user $u$ ($u \in U$) from base-station $b$ ($b \in B$)
- Let $I(u,b)$ to represent the total interference from base-station $b$ ($b \in B$) at user $u$ ($u \in U$)

Additionally, a subscript notation is used to distinguish between the above quantities when they are corresponding to the reference scenario, r, and when are associated to a new configuration vector, c. For example $SB_r(u)$ represents the serving base-station of user $u$ ($u \in U$) in the reference scenario and $SB_c(u)$ shows the same quantity when configuration vector, $c$ is applied instead of the settings in the reference scenario. In principle, the reference scenario is used to calculate the users' path loss and other interference plus noise components that can be used for evaluating any other configuration setting. Based on these notations, the above steps can be mathematically expressed as follows.

$$1.\ \forall u \in U, \forall b \in B : PL_r(u,b) = P_r^P(b) - R_r(u,b)$$

$$2.\ \forall u \in U : S_r(u) = P_r^D(SB_r(u)) - PL_r\big(u, SB_r(u)\big)$$

$$3.\ \forall u \in U : IN_r^{tot}(u) = S_r(u) - SINR_r(u)$$

4. $\forall u \in U, \forall b \in B \setminus SB_r(u): I_r(u,b) = P_r^T(b) - PL_r(u,b)$

5. $\forall u \in U : IN_r^{other}(u) = IN_r^{tot}(u) - ld\left(\sum_{\forall b \in B \setminus SB_r(u)} dl\big(I_r(u,b)\big)\right)$

Where *ld(.) is a function to convert* values on a linear scale to the corresponding quantities in decibel scale; that is $ld(x) = 10\log_{10}(x)$ and *dl(.)* is a function to convert values on a decibel scale to the corresponding quantities in linear scale; that is $dl(x) = 10^{\frac{x}{10}}$.

Now consider configuration vector *c* is to be evaluated. The vector contains new pilot and data channel power and cell association bias for each of the base-stations. However, as mentioned earlier, the path loss and the other interference and noise component is independent of base-station's configuration. That is to say, $\forall u \in U, \forall b \in B$ :

$PL_c(u,b) = PL_r(u,b)$ and $\forall u \in U : IN_c^{other}(u) = IN_r^{other}(u)$.

Considering new configuration vector, c, we have

6. $\forall u \in U : SB_c(u) = \arg\max_{b \in B} \left(P_c^P - PL_c(u,b) + \delta(b)\right)$

7. $\forall b \in B : N_c(b) = \sum_{u \in U} x(u)$ *where* $x(u) = \begin{cases} 1 \; if \; SB_c(u) = b \\ 0 \quad otherwise \end{cases}$

8. $\forall u \in U : S_c(u) = P_c^D(SB_c(u)) - PL_c\big(u, SB_c(u)\big)$

9. $\forall b \in B : P_c^T(b) = ld\big(dl\big(P_c^r(b)\big) + N_c(b)dl\big(P_c^r(b)\big)\big)$

10. $\forall u \in U, \forall b \in B \setminus SB_c(u): I_c(u,b) = P_c^T(b) - PL_c(u,b)$

11. $\forall u \in U : IN_c^{tot}(u) = IN_c^{other}(u) + ld\left(\sum_{\forall b \in B \setminus SB_c(u)} dl\big(I_c(u,b)\big)\right)$

12. $\forall u \in U : SINR_c(u) = S_c(u) - IN_c^{tot}(u)$

13. $\forall u \in U : T_c(u) = f(SINR_c(u), N_c(SB_c(u)))$

Where *f* is the function used to map the SINR and number of users to the achievable throughput. If small cells are not deployed too densely, their interactions will be marginal (i.e. changing the configuration settings of one small cell does not have significant impact on performance of another small cell). In such scenarios, the main interaction is between each small cell and the underlying macrocell and hence the optimal configuration for each small cell can be found independent of other small cells. In this case, the optimal configuration settings can be found in a brute force manner for each of the small cells. The case is also true when there are only very few small cells in the coverage area of the underlying macrocell.

On the other hand, if there are a number of small cells that are deployed densely, they may not be considered independent and hence the number of configuration settings to be evaluated in case of a brute force mechanism increases as all combination of configurations ought to be tried out. While this may still not be of issue (since these calculations are performed offline without any impact on the network's real-time performance, and can be dispatched to cloud computing resources for example), it is possible to use other search mechanisms such as the Gradient Descent (GD) methods to find the optimal (near optimal) settings.

The method is simultaneously applicable to LTE networks with the difference that in that case, the allocated power to each sub-band should be recorded at the cell level and the resource blocks allocated to users' needs to be also recorded.

Simulation Results

Two example scenarios where embodiments are deployed will now be described. The first scenario refers to the case when a small cell base-station is deployed with an offset from the centre of the hotspot. The scenario consists of macrocell tier and a single small cell base-station. A total of 30 users are considered where 10 users are placed within a hotspot with an effective radius of 50m and the rest of the users are randomly distributed. The fitness function, *f*, used here is a combination of the mean of users' average achievable throughput and the averaged lowest 10th percentile of the users' achievable throughput. More specifically speaking

$$f = T^{*} + 5T_{10}$$

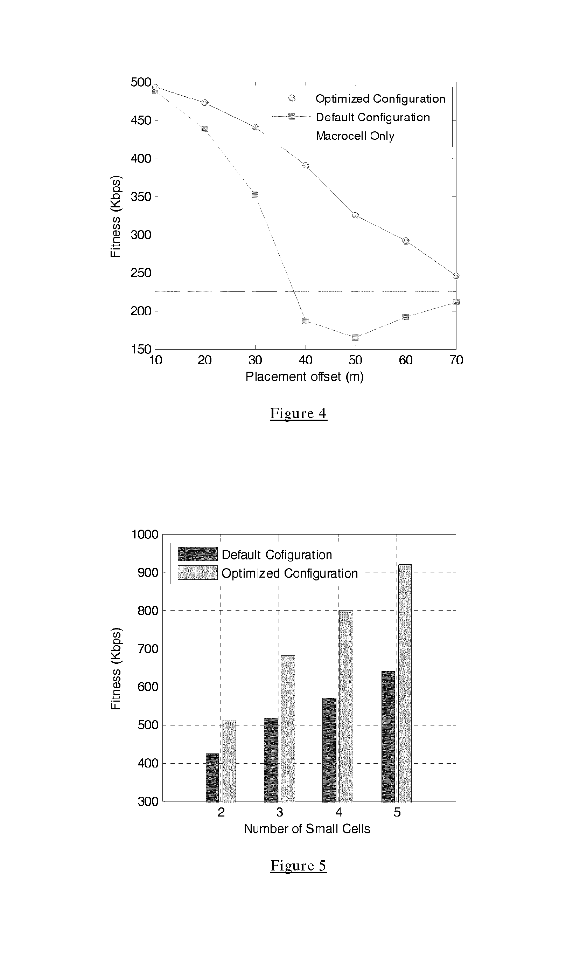

Where $T^{*}$ is the average users' achievable throughput and $T_{10}$ is the averaged lowest 10th percentile of the users' achievable throughput. Using an exhaustive search algorithm with relatively coarse quantization steps for the pilot and data channels' power as well as the cells' association bias values, Figure 4 shows the fitness as a function of small cell deployment offset from the centre of the hot spot. As expected, the fitness decreases with distance of the small cell from the centre of the hot spot. However, the fitness is considerably improved when the optimal configuration using the proposed scheme is applied compared to the default settings in that 10% of the total power is allocated to the pilot channel and the rest to the data channel and no cell's attachment bias is applied. Additionally, the figure shows the expected fitness function when only the macrocell base station exists. It is interesting to see that with a small cell base station placed at the incorrect position the overall fitness can be even worse than when it didn't exist. However, with the optimization mechanism introduced, the fitness can be still improved even when the small cell base station is miss-placed.
The second scenario considered refers to the case when a number of small cells are deployed to cover a large hotspot (150m radius). The large hotspot contains 20 out of the 30 users. In this scenario, the configuration of such small cells is of importance as they will interact closely with each other. Figure 5 shows the fitness values for varying number of small cells deployed (same fitness function as the previous scenario is used). Expectedly, the fitness increases with the number of small cells deployed. Moreover, the gain from deploying the proposed optimization scheme becomes more pronounced with the increase in the number of deployed cells. This is mainly because such optimizations become more necessary when there are stronger interactions between the small cells and the scenario is more complex.
As mentioned above, small cells are an emerging technology and it is expected to have dense deployment of such cells in future. Since deployment of small cells are rather unplanned, there is a need for a mechanism to assure their optimal configuration or otherwise their added value will be marginal and in some scenarios can results in performance degradation compared to a macrocells-only scenario.
Embodiments introduce a new mechanism for optimizing deployment of small cells according to any operator's defined objective function. In particular, embodiments provide a solution that:

1) is fully standard compliant and simple for implementation. It only uses standard measurements from users that are collected as a part of the overall operation (no additional overhead on users' equipment).
2) provides an optimal configuration that is based on the real distribution of the users and their measurement from the environment (unlike most cell planning tools that work based on approximation of users' distribution and channel conditions). Since the underlying model is constructed according to the users' measurements, any changes in the users' distribution over time (e.g. creation or disappearance of a hotspot) can be taken into account adaptively and autonomously.
3) provides an optimal configuration for all cells (could include the macrocell as well) based on a model which itself is constructed using a long term measured view of the network. Subsequently, the computed configuration is a network-wide optimal setting rather than a greedy local configuration.
4) provides an optimal configuration for all cells that is calculated offline and hence there is no impact on the real time performance of the network (no performance instability, lack of convergence, ping pong effect, drop calls as part of learning/ configuration phase etc.).
5) provides a network-wide picture to the operator identifying the contribution and impact of each of the cells (including the macro cell) deployed in the network. As a special configuration case, the objective function can be calculated in absence of any given cell (i.e. pilot and data power equal to zero) and to be compared against the reference scenario's objective function such that to quantify the impact of each of the cells.

Embodiments are a very attractive and straightforward way to optimally configure small cells (and macrocells) in a heterogeneous network scenario. The embodiments are very practical, fully standard compliant and can be applied to a wide range of wireless access technologies including WCDMA, HSDPA and LTE. Given the future dense deployment of small cells, there will be the need for a solution that can optimally configure those base-stations autonomously and without scarifying network stability and performance during the configuration phase.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method of adjusting configuration parameters of a cluster of base stations of a wireless telecommunications network, said method comprising:

   receiving at least one configuration report comprising measurements from user equipment attached to said cluster of base stations together with configuration parameter information indicating current configuration parameters of said cluster of base stations;
   utilising said configuration report together with sets of adjusted configuration parameters to determine a network performance of said cluster of base stations when operating using each set of adjusted configuration parameters from a network performance model;
   selecting one of said sets of adjusted configuration parameters which achieves a network performance which best matches a desired network performance criteria; and
   reconfiguring said cluster of base stations with said one of said sets of adjusted configuration parameters.

2. The method of claim 1, wherein said measurements comprise at least one of measurement reports generated by said user equipment attached to said cluster of base stations and sets of measurement reports, each set being received from an associated base station within said cluster of base stations.

3. The method of claim 1 or 2, wherein each set of measurement reports comprises at least one of a received pilot signal strength of transmissions from said cluster of base stations received by each user equipment attached to said associated base station and a signal to interference plus noise ratio for each user equipment.

**4.** The method of any preceding claim, wherein said configuration parameter information comprises at least one of a pilot power of an associated base station, a cell association bias value for said associated base station, a dedicated downlink transmission power of said associated base station and a total transmission power of said associated base station.

**5.** The method of any preceding claim, wherein each configuration report comprises measurements from user equipment, each of which are made within a synchronisation window and each configuration report comprises configuration parameter information indicating current configuration parameters of said cluster of base stations within said synchronisation window.

**6.** The method of any preceding claim, wherein said step of receiving comprises receiving a plurality of configuration reports, said measurements and said configuration parameter information of each configuration report relating to an associated synchronisation window.

**7.** The method of any preceding claim, wherein said step of utilising comprises deriving from said measurements and said configuration parameter information at least one of a path loss between each user equipment and each base station and an interference level for each user equipment.

**8.** The method of any preceding claim, wherein said step of utilising comprises deriving from said measurements and said configuration parameter information from each configuration report at least one of a path loss between each user equipment and each base station and an interference level for each user equipment.

**9.** The method of any preceding claim, wherein said step of deriving comprises deriving at least one of said path loss from said pilot power and said received pilot signal strength, and said interference level from said dedicated downlink transmission power, said path loss and said signal to interference plus noise ratio.

**10.** The method of any preceding claim, wherein said step of utilising comprises utilising each set of adjusted configuration parameters and at least one of said path loss and said signal to interference plus noise ratio within said network performance model to derive associated network performance indicators for said cluster of base stations when operating each set of adjusted configuration parameters.

**11.** The method of any preceding claim, wherein said step of selecting comprises selecting that set of adjusted configuration parameters whose derived performance indicator best matches said performance criteria.

**12.** The method of any preceding claim, wherein each set of adjusted configuration parameters comprise at least one of said pilot power, said cell association bias value and said dedicated downlink transmission power.

**13.** The method of any preceding claim, wherein said step of utilising comprises generating an initial set of adjusted configuration parameters and generating subsequent sets of adjusted configuration parameters based on a derived performance indicator for a preceding set of adjusted configuration parameters.

**14.** A computer program product operable, when executed on a computer, to perform the method steps of any one of claims 1 to 13.

**15.** A network node operable to adjust configuration parameters of a cluster of base stations of a wireless telecommunications network, said network node comprising:

reception logic operable to receive at least one configuration report comprising measurements from user equipment attached to said cluster of base stations together with configuration parameter information indicating current configuration parameters of said cluster of base stations;
utilisation logic operable to utilise said configuration report together with sets of adjusted configuration parameters to determine a network performance of said cluster of base stations when operating using each set of adjusted configuration parameters from a network performance model;
selection logic operable to select one of said sets of adjusted configuration parameters which achieves a network performance which best matches a desired network performance criteria; and
reconfiguration logic operable to reconfigure said cluster of base stations with said one of said sets of adjusted configuration parameters.

(a)  (b)  (c)  (d)

■ Small Cell BS

[ ] Small Cell Coverage

× Macrocell User

× Small Cell User

Figure 1

Figure 2

Figure 3

Figure 4

Figure 5

**EUROPEAN SEARCH REPORT**

Application Number

EP 13 30 5353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/044698 A1 (QUALCOMM INC [US]; YU LIWEN [US]; MESHKATI FARHAD [US]; YAVUZ MEHMET []) 5 April 2012 (2012-04-05)<br>* paragraphs [0008], [0023], [0034] - [0041], [0050]; figures 2, 3 *<br>----- | 1-15 | INV.<br>H04W24/02<br><br>ADD.<br>H04W24/10 |
| A | US 2011/256878 A1 (ZHU CHENXI [US] ET AL) 20 October 2011 (2011-10-20)<br>* paragraphs [0011], [0030], [0070], [0074] - [0077]; figure 3 *<br>----- | 1-15 | |
| A | US 2011/319122 A1 (ZHOU YAN [US] ET AL) 29 December 2011 (2011-12-29)<br>* paragraphs [0010], [0044], [0045], [0095]; figure 5 *<br>----- | 1-15 | |

TECHNICAL FIELDS
SEARCHED     (IPC)

H04W

The present search report has been drawn up for all claims

| Place of search | Date of completion of the search | Examiner |
|---|---|---|
| Munich | 2 August 2013 | Cantagallo, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 13 30 5353

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2013

| Patent document cited in search report | | Publication date | Patent family member(s) | | Publication date |
|---|---|---|---|---|---|
| WO 2012044698 | A1 | 05-04-2012 | US  2012238279 A1<br>WO  2012044698 A1 | | 20-09-2012<br>05-04-2012 |
| US 2011256878 | A1 | 20-10-2011 | NONE | | |
| US 2011319122 | A1 | 29-12-2011 | CN   102960034 A<br>EP    2589244 A1<br>KR  20130033477 A<br>TW    201208423 A<br>US  2011319122 A1<br>WO  2012003241 A1 | | 06-03-2013<br>08-05-2013<br>03-04-2013<br>16-02-2012<br>29-12-2011<br>05-01-2012 |

EPO FORM P0459

For more details about this annex : see Official Journal of the European Patent Office, No. 12/82